# EUROPEAN PATENT APPLICATION

(11) **EP 4 711 574 A1**
(43) Date of publication of application: **18.03.2026**
(21) Application number: 25198935.6
(22) Date of filing: 29.08.2025
(51) Int. Cl.: E05F 15/73, E05F 15/76

(54) **VEHICLE DOOR CONTROL DEVICE**

(30) Priority: 17.09.2024 JP 2024160011; 11.06.2025 JP 2025097519
(71) Applicant: AISIN CORPORATION, Aichi 448-8650 (JP)
(72) Inventor: MIZOKAWA, Yoshihiro, Kariya, Aichi 448-8650 (JP); OKA, Harutaka, Kariya, Aichi 448-8650 (JP)
(74) Representative: TBK

(57) **Abstract**

A vehicle door control device (1) includes: a shoulder operation detection unit (31A) configured to detect a motion of a shoulder of a user present around a vehicle; a use intention determination unit (31B) configured to determine whether the user has an intention to use the vehicle based on a detection result of the shoulder operation detection unit; a target door estimation unit (31C) configured to estimate a target door that is a door predicted to be opened by the user among doors of the vehicle; and a control unit (31D) configured to execute control for opening the door, which is the target door estimated by the target door estimation unit, when the use intention determination unit determines that the user has an intention to use the vehicle.

## Description

### TECHNICAL FIELD

This disclosure relates to a vehicle door control device that controls a door of a vehicle.

### BACKGROUND DISCUSSION

JP 2022-524731A (Reference 1) describes a door lock-release method for releasing door locking of a vehicle and opening a door based on face authentication. In the door lock-release method of Reference 1, a distance between an object outside the vehicle and an infrared ranging sensor is continuously acquired by the infrared ranging sensor. Next, in response to the acquired distance gradually decreasing and a duration time, in which the distance is equal to or less than a first distance threshold, reaching a first time threshold, an image collection module disposed in the vehicle is controlled to collect a video stream. The face authentication is performed based on an image of the collected video stream, and the door locking of the vehicle is released in response to successful face authentication.

In the door lock-release method of Reference 1, a user can release the door locking by approaching the vehicle and causing the vehicle to image the face. However, when the face of the user is hidden by a hat, a mask, or the like, there is a possibility that the face authentication fails and the door is not opened. Therefore, there is room for improvement in detecting an operation of the user.

A need thus exists for a vehicle door control device capable of controlling a door of a vehicle based on an operation of a user.

### SUMMARY

According to an aspect of this disclosure, a vehicle door control device includes: a shoulder operation detection unit configured to detect a motion of a shoulder of a user present around a vehicle; a use intention determination unit configured to determine whether the user has an intention to use the vehicle based on a detection result of the shoulder operation detection unit; a target door estimation unit configured to estimate a target door that is a door predicted to be opened by the user among doors of the vehicle; and a control unit configured to execute control for opening the door, which is the target door estimated by the target door estimation unit, when the use intention determination unit determines that the user has an intention to use the vehicle.

The control for opening the door in the present specification is a concept including control for releasing the locking of the door, control for opening the door, or control for executing both of them.

According to the vehicle door control device of the disclosure having the configuration, it is possible to determine whether the user has an intention to use the vehicle based on the motion of the shoulder of the user present around the vehicle, and when it is determined that the user has a use intention on the vehicle, it is possible to execute control for opening the door, which is the target door estimated by the target door estimation unit, that is, the door predicted to be opened by the user. Accordingly, it is possible to control the door of the vehicle based on the motion of the user.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to a first embodiment;
Fig. 2 is a block diagram showing a configuration of a vehicle door control device according to the first embodiment;
Fig. 3 is a flowchart showing a door control processing program according to the first embodiment;
Fig. 4 shows a motion of a shoulder of a user walking on a right side of the vehicle;
Fig. 5 is a graph showing a relationship between an X coordinate and a shoulder angle when the user walks from the right front to the rear of the vehicle shown in Fig. 4;
Fig. 6 is a graph showing the relationship between the X coordinate and the shoulder angle when the user walks from the rear to the right front of the vehicle;
Fig. 7 is a diagram showing a movement path of the user and the motion of the shoulder when an obstacle is present around the vehicle;
Fig. 8 is a block diagram showing a configuration of a vehicle door control device of another example;
Fig. 9 is a flowchart of a door control processing program of another example;
Fig. 10 is a flowchart of a door control processing program according to a second embodiment; and
Fig. 11 is a flowchart of a door control processing program of another example.

### DETAILED DESCRIPTION

### First Embodiment

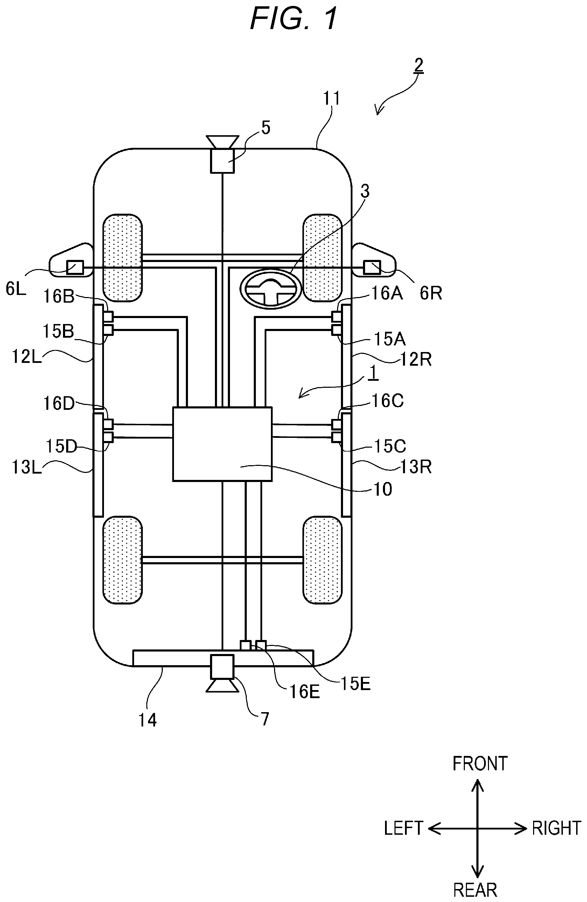

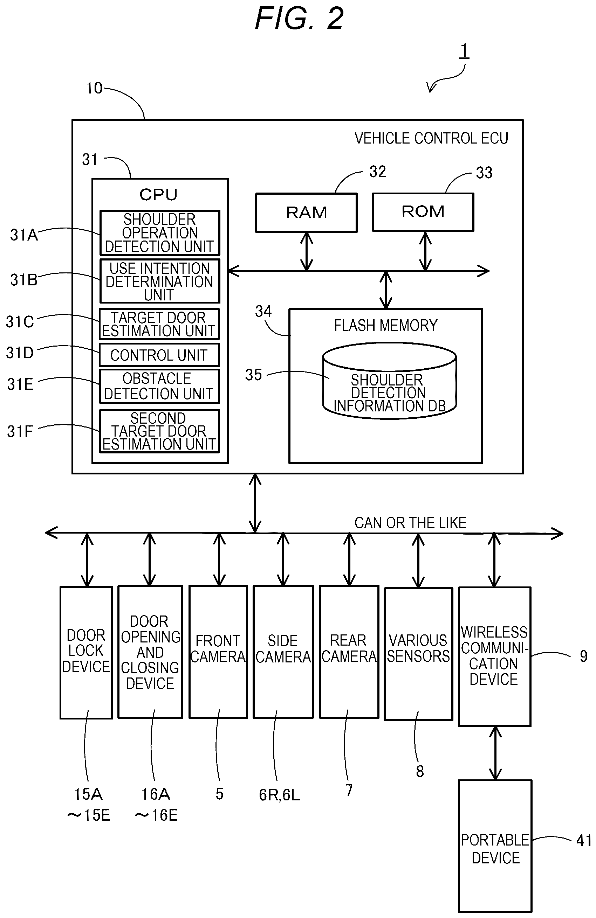

Hereinafter, a vehicle door control device according to an embodiment disclosed here will be described in detail with reference to the drawings. First, a vehicle 2 equipped with a vehicle door control device 1 according to a first embodiment will be described below. Fig. 1 is a schematic configuration diagram of the vehicle 2 according to the first embodiment. Fig. 2 is a block diagram showing the vehicle door control device 1 according to the first embodiment. In the following description, a front-rear direction of the vehicle 2, a left-right direction of the vehicle 2, and an up-down direction of the vehicle 2 are simply referred to as a front-rear direction, a left-right direction, and an up-down direction, respectively. A reference sign of a device or the like on a right side of the vehicle 2 may be denoted by R, and a reference sign of a device or the like on a left side of the vehicle 2 may be denoted by L. In addition to the components shown in Figs. 1 and 2, the vehicle 2 also includes basic components of the vehicle 2. However, the following description will mainly focus on the configuration related to control for opening and closing of doors, and control related to the configuration.

As shown in Fig. 1, the vehicle 2 is, for example, a vehicle having a handle 3 on the right side, and includes a vehicle body 11, a front door 12R on a driver's seat side, a front door 12L on a passenger's seat side, a rear door 13R on the driver's seat side, a rear door 13L on the passenger's seat side, and a back door 14. Hereinafter, the front doors 12R and 12L, the rear doors 13R and 13L, and the back door 14 may be collectively referred to as doors. Each door is, for example, a swing type door. The vehicle 2 includes door lock devices 15A, 15B, 15C, 15D, and 15E that control locking of the respective doors, and door opening and closing devices 16A, 16B, 16C, 16D, and 16E that open and close the respective doors. The door lock devices 15A to 15E control locking of the front doors 12R and 12L, the rear doors 13R and 13L, and the back door 14 in this order. The door lock devices 15A to 15E are devices that switch the respective doors between a locked state where the door is locked and a lock-release state where the door is unlocked. The door opening and closing devices 16A to 16E are devices that open and close the front doors 12R and 12L, the rear doors 13R and 13L, and the back door 14 in this order. Each of the door opening and closing devices 16A to 16E includes, for example, a motor as a drive source, and opens and closes each door by driving the motor.

A configuration of the vehicle 2 shown in Fig. 1 is an example. For example, the vehicle 2 is not limited to the vehicle having the handle 3 on the right side, and may be a vehicle having the handle 3 on the left side. In addition, each door is not limited to the swing type door, and other opening and closing type doors such as a slide door can be adopted. The doors may be opened and closed in different manners. Therefore, only the rear doors 13R and 13L may be slide doors. The drive source of the door opening and closing devices 16A to 16E is not limited to the motor, and may be another drive source such as a hydraulic cylinder. The vehicle 2 may be an internal combustion engine automobile using an internal combustion engine (engine or the like) as the drive source, an electric vehicle using an electric motor as a drive source, a fuel cell vehicle, or a hybrid vehicle having a plurality of drive sources thereof. A vehicle type, the number of wheels, or the like of the vehicle 2 are not particularly limited. The vehicle 2 may be a vehicle capable of manual driving, a vehicle capable of autonomous driving, or a vehicle capable of switching between manual driving and autonomous driving.

As shown in Figs. 1 and 2, the vehicle door control device 1 includes a front camera 5, side cameras 6R and 6L, a rear camera 7, various sensors 8, a wireless communication device 9, and a vehicle control electronic control unit (ECU) 10. Hereinafter, the front camera 5, the side cameras 6R and 6L, and the rear camera 7 may be collectively referred to as cameras.

Each camera is, for example, an imaging device having a solid-state imaging element such as a CCD, and captures an image around the vehicle. The front camera 5 is attached to, for example, an upper side of a front bumper of the vehicle 2 and a back side of a room mirror, and is disposed in a state where an optical axis direction is directed to the front of the vehicle 2. The side cameras 6R and 6L are attached to, for example, left and right side mirrors of the vehicle 2, respectively, and are disposed in a state where an optical axis direction is directed to a side of the vehicle 2. The rear camera 7 is attached above a license plate mounted on the rear side of the vehicle 2, for example, and is disposed in a state where an optical axis direction is directed to the rear of the vehicle 2.

The various sensors 8 are sensors for implementing various functions of the vehicle 2. As the sensor 8, for example, an ultrasonic sensor, a millimeter wave radar, and a laser sensor may be used as a sensor for detecting an obstacle around the vehicle. Alternatively, the sensor 8 may be a vehicle speed sensor, an acceleration sensor, a gyro sensor, a steering sensor, a shift position sensor, or the like, as a sensor used for traveling of the vehicle 2.

The wireless communication device 9 is a device that executes wireless communication with a portable device 41. The portable device 41 is, for example, a so-called electronic key. Alternatively, the portable device 41 may be a smartphone used in a digital key system, or may be another communication terminal capable of wirelessly communicating with the vehicle 2. The portable device 41 includes buttons for operating the door lock devices 15A to 15E and the door opening and closing devices 16A to 16E.

### Vehicle Control ECU 10

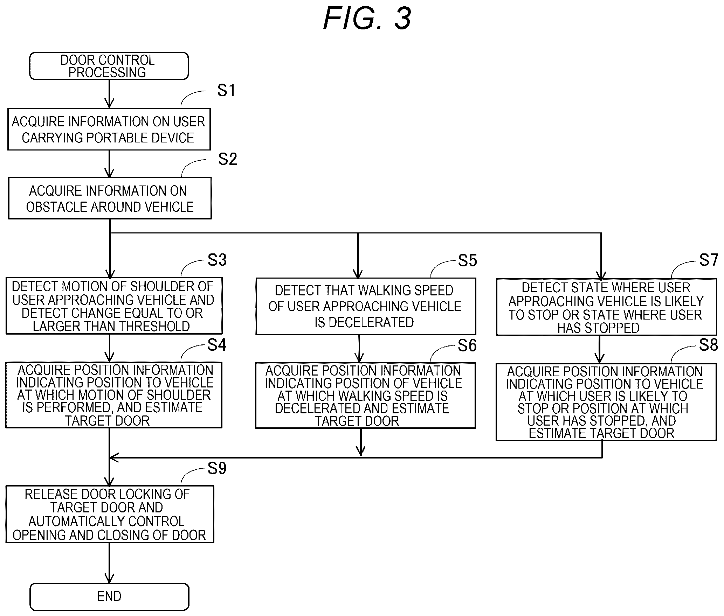

The vehicle control ECU (hereinafter, simply referred to as an ECU) 10 is an electronic control unit that comprehensively controls the entire vehicle 2 including the vehicle door control device 1. The vehicle control ECU 10 includes a CPU 31 serving as a calculation device and a control device, and internal storage devices such as a RAM 32 used as a working memory when the CPU 31 executes various kinds of calculation processing, a ROM 33 in which a door control processing program (see Fig. 3) to be described later or the like are stored in addition to a control program, and a flash memory 34 that stores a program and a flag value read from the ROM 33.

The ECU 10 implements various functional units by executing programs in the CPU 31. For example, a shoulder operation detection unit 31A is a functional unit that detects a motion of a shoulder of a user present around the vehicle. A use intention determination unit 31B is a functional unit that determines whether the user has an intention to use the vehicle based on a detection result of the shoulder operation detection unit 31A. A target door estimation unit 31C is a functional unit that estimates a target door that is a door predicted to be opened by the user among the doors of the vehicle. A control unit 31D is a functional unit that executes control for opening a door, which is the target door estimated by the target door estimation unit 31C, when the use intention determination unit 31B determines that the user has an intention to use the vehicle. An obstacle detection unit 31E is a functional unit that detects an obstacle present around the vehicle. A second target door estimation unit 31F is a functional unit that estimates the target door based on at least one position among a position at which a movement speed of the user approaching the vehicle is decelerated, a position at which the user is predicted to stop moving, and a position at which the user stops moving. That is, the vehicle control ECU 10 is an example of the shoulder operation detection unit, the use intention determination unit, the target door estimation unit, the control unit, the obstacle detection unit, and the second target door estimation unit in the present specification.

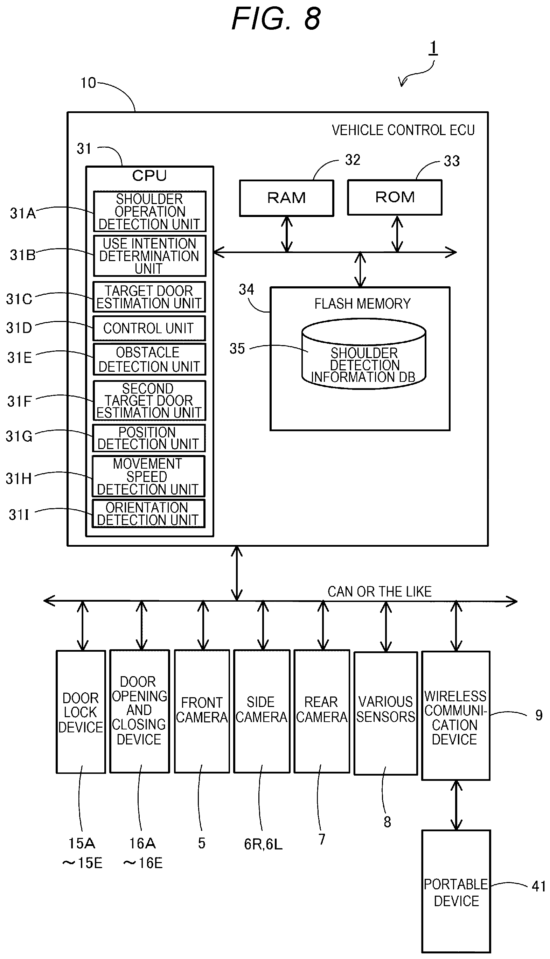

A configuration of the vehicle door control device 1 shown in Fig. 2 is an example, and can be changed as appropriate. The vehicle door control device 1 may have a configuration shown in Fig. 8. A position detection unit 31G shown in Fig. 8 is a functional unit that detects a position of the portable device 41 carried by the user. A movement speed detection unit 31H is a functional unit that detects the movement speed of the user present around the vehicle. An orientation detection unit 311 is a functional unit that detects an orientation of a body of the user present around the vehicle. That is, the vehicle control ECU 10 may be an example of the shoulder operation detection unit, the use intention determination unit, the target door estimation unit, the control unit, the obstacle detection unit, the second target door estimation unit, the position detection unit, the movement speed detection unit, and the orientation detection unit in the present specification.

The use intention determination unit 31B may be a functional unit that determines whether the user has an intention to use the vehicle based on information other than the detection result of the shoulder operation detection unit 31A. For example, as will be described later, the use intention determination unit 31B may be configured to determine whether the user has an intention to use the vehicle based on a change in which the movement speed detected by the movement speed detection unit 31H is decelerated. The target door estimation unit 31C may be configured to estimate the target door based on the change in which the movement speed detected by the movement speed detection unit 31H is decelerated. The change in which the movement speed is decelerated in the present specification is not limited to a change in which the movement speed is decelerated from any movement speed to a movement speed lower than the movement speed. A change in which the movement speed is decelerated until the movement speed becomes zero, that is, a change in which the user is changed from a moving state to a standing state is also included in the change in which the movement speed is decelerated. The change in which the movement speed is decelerated in the present specification is not limited to a change in which the movement speed is decelerated when the user moves in a direction approaching the vehicle 2, and may be a change in which the movement speed at which the user moves in parallel with a side surface of the vehicle 2 is decelerated, or a change in which the movement speed at which the user moves in a direction away from the vehicle 2 is decelerated. In the embodiment, a walking user will be described as a target, and a case where a walking speed is adopted as the movement speed will be described.

A shoulder detection information DB 35 is stored in the flash memory 34. The shoulder detection information DB 35 stores threshold information for determining whether the user has an intention to use the vehicle 2 based on the motion of the shoulder of the user around the vehicle, threshold information for estimating the target door, or the like. The information of the shoulder detection information DB 35 may be set in advance by a vehicle manufacturer, for example, or may be set according to a height, a shoulder width, a body shape, or the like of the user after purchasing the vehicle 2.

The ECU 10 is connected to the door lock devices 15A to 15E, the door opening and closing devices 16A to 16E, the cameras (the front camera 5 or the like), the various sensors 8, and the wireless communication device 9, which are described above, via an in-vehicle network such as a CAN. The ECU 10 executes various calculations based on information received from each camera and each sensor 8, and controls the vehicle 2. For example, the ECU 10 displays a bird's-eye view image or an overhead image on a monitor (not shown) of the vehicle 2 based on imaging data captured by each camera, and executes driving assistance.

The ECU 10 drives the door lock devices 15A to 15E and the door opening and closing devices 16A to 16E to control locking (key) of each door and opening and closing of the door. The ECU 10 executes wireless communication with the portable device 41 via the wireless communication device 9, and executes key authentication, lock-release of each door, opening and closing of the door, or the like according to the button operated on the portable device 41. Processing such as key authentication and locking of a door may be executed by a device other than the ECU 10, for example, the wireless communication device 9.

### Regarding Door Control Processing Program

Next, the door control processing program executed by the ECU 10 in the vehicle door control device 1 having the above-described configuration will be described with reference to Fig. 3. Fig. 3 is a flowchart showing the door control processing program according to the first embodiment. Here, for example, when the ECU 10 detects that the user carrying the portable device 41 approaches a position at a predetermined distance (for example, several meters) from the vehicle 2 in a state where the engine of the vehicle 2 is stopped and all the doors are locked, the ECU 10 starts the door control processing program. The door control processing program is a program that determines whether the user has an intention to use the vehicle 2 based on the motion of the shoulder of the user or the like, and executes control for opening a door (hereinafter, referred to as a target door) predicted to be opened by the user when it is determined that the user has the intention to use the vehicle 2. In the following description, a case where control for releasing the locking and opening the target door is executed as control for opening the door will be described.

The "control for opening the door" in the present specification may be control for releasing the locking of each door or control for opening each door. Therefore, the ECU 10 may execute only control for releasing the locking of the target door in S9 of Fig. 3 described later. A condition for starting the execution of the door control processing program is not limited to the above-described condition. The ECU 10 may execute the processing of Fig. 3 in a state where the engine of the vehicle 2 is started and the portable device 41 is inside the vehicle. For example, when the ECU 10 detects that a user who does not have the portable device 41 approaches the position at the predetermined distance from the vehicle 2 in a state where the engine of the vehicle 2 is started and all the doors of the vehicle 2 are locked, the ECU 10 may start the processing of Fig. 3 to the user as a target. Alternatively, the ECU 10 may start the door control processing program when it is detected that the locking of all the doors is released by the portable device 41 in the state where the engine of the vehicle 2 is stopped and all the doors are locked. In this case, when the user has an intention to use the vehicle 2, the ECU 10 may execute control for opening the target door whose locking has already been released. That is, as the "control for opening the door" in the present specification, only the control for opening the target door may be executed. The program shown in the flowchart in Fig. 3 is stored in the RAM 32 or the ROM 33 provided in the vehicle door control device 1, and is executed by the CPU 31.

First, in step (hereinafter abbreviated as S) 1 of Fig. 3, the CPU 31 acquires information of the user carrying the portable device 41 that has approached a position at a predetermined distance from the vehicle 2. As a method of determining whether the user has approached the position at the predetermined distance from the vehicle 2, for example, a method of determination based on position information of the portable device 41 can be adopted. For example, the position of the portable device 41 (user) may be detected using triangulation based on distances between a plurality of wireless antennas of the wireless communication device 9 and the portable device 41. Alternatively, a position of the user may be detected using a millimeter wave radar or the camera mounted on the vehicle 2.

In S1, the CPU 31 activates, for example, each camera, and acquires information of the user necessary for processing of S3 to S8 described below. Specifically, the CPU 31 acquires information such as the motion of the shoulder of the user, the position of the user, a movement direction of the user, the orientation of the body of the user, and the movement speed of the user by performing image processing on the imaging data of each camera. A method of acquiring the information of the user is not limited to the method using the imaging data of the camera. For example, the CPU 31 may detect the motion of the shoulder of the user or the like based on point cloud data of the millimeter wave radar.

Therefore, when the position of the portable device 41 detected by the wireless communication device 9 or the like is within a range of the predetermined distance from the vehicle 2, the CPU 31 executes processing of detecting the motion of the shoulder of the user or processing of detecting the change in which the walking speed is decelerated. When the user carrying the portable device 41 is present within the predetermined range from the vehicle 2, the CPU 31 executes the processing of Fig. 3, and determines whether the user has an intention to use the vehicle 2 (S3, S5, and S7) and estimates the target door (S4, S6, and S8) based on the motion of the shoulder, a deceleration position, or the like, which will be described later. In other words, the CPU 31 does not execute the processing of Fig. 3 when the portable device 41 (user) is outside the predetermined range from the vehicle 2. Accordingly, in a situation in which a distance between the vehicle 2 and the user is long and determination accuracy of the use intention or estimation accuracy of the target door is low, it is possible to prevent activation or the like of each camera and reduce unnecessary consumption of a battery. The CPU 31 may detect the motion of the shoulder of the user, the deceleration position, or the like even when the position of the portable device 41 is a position away from the vehicle 2 by the predetermined distance. For example, the CPU 31 may start the processing of detecting the motion of the shoulder of the user or the like at the time point when the portable device 41 is detected by the wireless communication device 9, that is, in a maximum range in which the position of the portable device 41 can be detected.

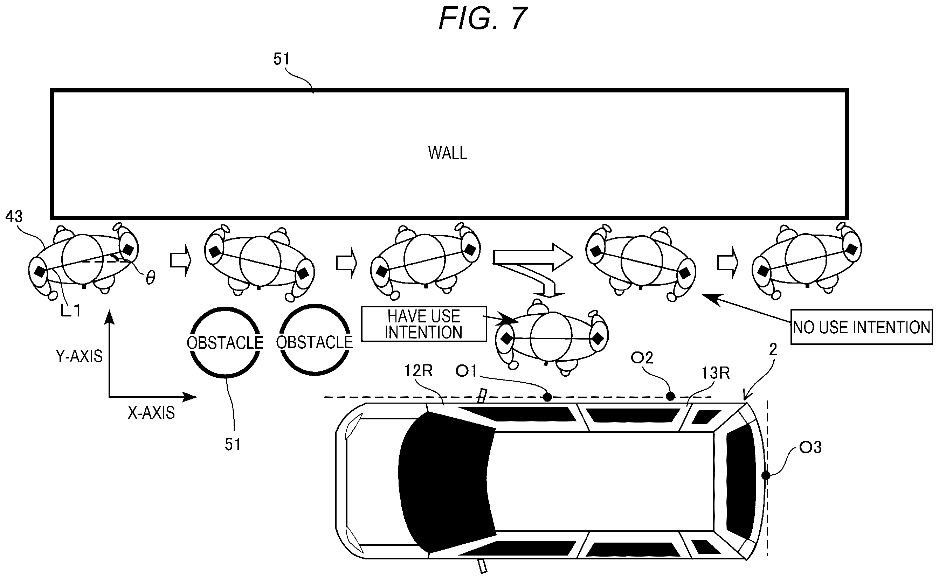

Next, the CPU 31 acquires information on an obstacle around the vehicle (S2). As a method of acquiring the information on the obstacle, for example, a method using a camera or a method using a millimeter wave radar can be adopted, similarly to the method of acquiring the information of the user described above. As will be described later, the motion of the shoulder of the user changes depending on an arrangement of the obstacle. Therefore, the CPU 31 may detect only the obstacle around the user in S2. The CPU 31 changes a determination condition of S3 based on the information on the obstacle acquired in S2. First, a case where no obstacle is present is described, and then a case where an obstacle is present is described (see Fig. 7).

Next, the CPU 31 executes, for example, processing of a combination of S3 and S4, processing of a combination of S5 and S6, and processing of a combination of S7 and S8 in parallel. In each of the three sets of parallel processing, the CPU 31 determines whether the user has an intention to use the vehicle 2 (hereinafter referred to as a use intention), and estimates the target door. First, processing of S3 and S4 will be described. In the processing of S3, the CPU 31 determines whether there is a use intention based on the change in the motion of the shoulder. In the processing of S4, the CPU 31 estimates the target door based on the position of the user when the motion of the shoulder changes. In the present specification, the intention to use the vehicle is not limited to an intention to open each door and get in the vehicle, and includes an intention to open each door and work without getting in the vehicle, such as an intention to open each door and put a package, and an intention to take out a package. Therefore, the door in the present specification includes the back door 14.

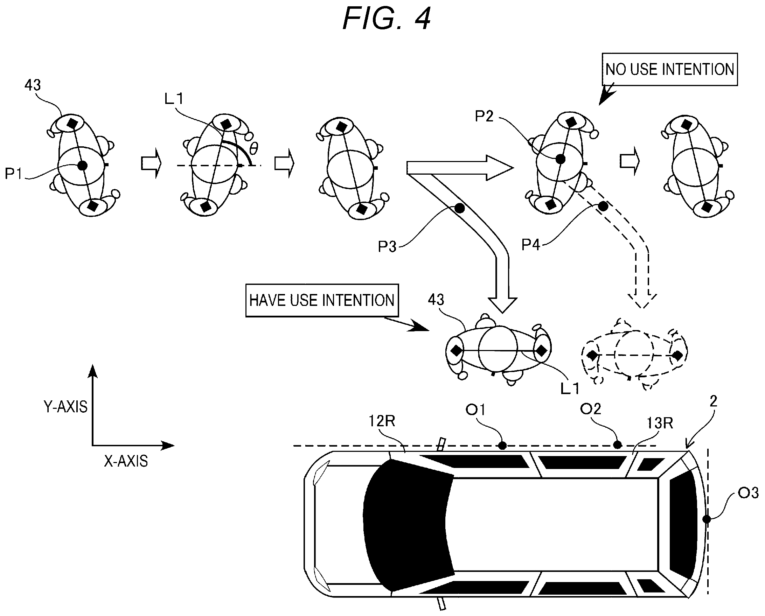

In S3, the CPU 31 detects the motion of the shoulder of the user approaching the vehicle 2 based on the imaging data captured by each camera. Fig. 4 shows a state of a user 43 walking on the right side of the vehicle 2 as an example. A straight line L1 in Fig. 4 is a straight line connecting both shoulders of the user 43. For example, the CPU 31 generates an overhead image of a region around the vehicle looking down vertically from above based on real-time imaging data captured by all cameras of the front camera 5, the side cameras 6R and 6L, and the rear camera 7. The CPU 31 detects the straight line L1 connecting both shoulders of the user 43 around the vehicle, a traveling direction of the user 43, or the like based on the generated overhead image. The image for detecting the motion of the shoulder is not limited to the overhead image, and may be a bird's-eye view image of a region around the vehicle looking downward obliquely from above. The CPU 31 may detect the straight line L1 using another device such as a millimeter wave radar.

The CPU 31 sets coordinates for determining a shoulder angle. For example, the CPU 31 sets an origin at a position of a door closest to a current position of the user 43, and sets a coordinate axis along the vehicle 2. In the example shown in Fig. 4, a state of the user 43 approaching the vehicle 2 from a position P1 is shown. The user 43 is walking rearward along a direction parallel to a right side surface of the vehicle 2 from the position P1 that is obliquely forward right of the vehicle 2. Therefore, at the time point when the user 43 who has approached the vehicle 2 to the position P1 is detected, the front door 12R is the door closest to the user 43 among the doors of the vehicle 2. For example, the CPU 31 sets an origin O1 at a position of a door knob of the front door 12R, sets a line passing through the origin O1 along the front-rear direction (along the right side surface of the vehicle 2) as an X-axis, and sets a line perpendicular to the X-axis and parallel to the left-right direction passing through the origin O1 as a Y-axis. The CPU 31 sets a positive value in a rearward direction and a negative value in a forward direction from the origin O1 on the X-axis. The CPU 31 sets a positive value in a right direction and a negative value in a left direction from the origin O1 on the Y-axis. The CPU 31 detects an angle formed by the straight line L1 with respect to the X-axis, as a shoulder angle θ. The CPU 31 detects a counterclockwise direction as a positive angle and a clockwise direction as a negative angle with respect to the X-axis. The CPU 31 detects the motion of the shoulder based on the angle θ.

The method of detecting the motion of the shoulder is not limited to the method of detecting the angle θ of the straight line L1 connecting both shoulders. For example, a difference between the X-axis and the Y-axis may be calculated for each of the XY coordinates of both shoulders, and the motion of the shoulders may be detected based on the difference. The CPU 31 may change a position of the origin O1 when the door closest to the current position of the user 43 is changed due to the movement of the user 43. For example, as shown in a position P2 in Fig. 4, when the user 43 moves rearward to a position facing the rear door 13R in the left-right direction and the door closest to the user 43 is the rear door 13R, an origin O2 may be set at a position of a door knob of the rear door 13R and the XY coordinates may be reset. Similarly, when the user 43 moves to the rear of the vehicle 2 and the door closest to the user 43 is the back door 14, an origin O3 may be set at a position of a door knob of the back door 14 and the XY coordinates may be reset. In this case, a line passing through the origin O3 along the left-right direction (along a back surface of the vehicle 2) may be set as the X-axis, and a line passing through the origin O3 along the front-rear direction may be set as the Y-axis.

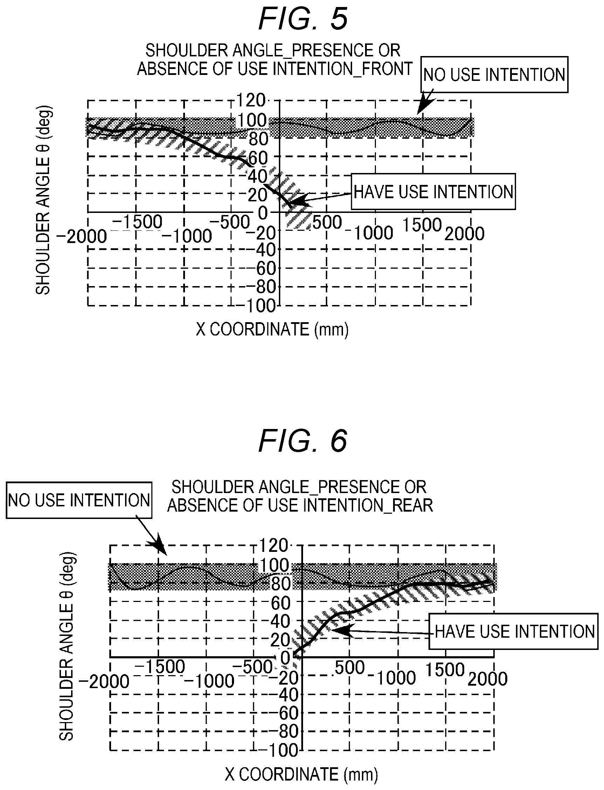

Fig. 5 is a graph showing a relationship between an X coordinate (mm) and the shoulder angle θ (deg) when the user 43 walks from the right front to the rear of the vehicle 2 shown in Fig. 4. In the case shown in Fig. 4, the X coordinate of the position of the user 43 changes from negative to positive. When the user 43 does not have the use intention on the vehicle 2, for example, as indicated by a tip of an arrow with characters "no use intention" in Figs. 4 and 5, the user 43 passes beside the vehicle 2 and walks toward the rear of the vehicle 2 without approaching the vehicle 2. The user 43 advances toward the rear, and moves rearward while moving the shoulders back and forth. In this case, the shoulder angle θ of the user 43 changes within a predetermined angle range (for example, +100 degrees to +80 degrees), and does not change to a predetermined angle (for example, +80 degrees) or less.

On the other hand, when the user 43 has a use intention on the vehicle 2 as indicated by a tip of an arrow with characters "have use intention" in Figs. 4 and 5, the user 43 approaches the vehicle 2 by a certain distance from the position P1, then turns to the right direction by 90 degrees toward the vehicle 2, and walks to the vicinity of the right front door 12R. In this case, the shoulder angle θ of the user 43 changes in a range (for example, +80 degrees to +5 degrees) out of the above-described predetermined angle range. The angle θ changes to the predetermined angle (for example, +80 degrees) or less.

As described above, an upper limit value, a lower limit value, and a change amount of the shoulder angle θ are different between the case where the user 43 has the use intention on the vehicle 2 and the case where the user 43 does not have the use intention on the vehicle 2. Therefore, the CPU 31 compares each of the shoulder angle θ of the user 43 and the change amount of the shoulder angle θ with a threshold, and determines whether the user 43 has a use intention on the vehicle 2. For example, in the case shown in Fig. 5, +80 degrees can be set as the threshold of the angle θ. When there is a use intention, the shoulder angle θ changes from a state of ±20 degrees of +100 degrees to +80 degrees to a range of +80 degrees to +5 degrees. Therefore, for example, when the change amount of the angle θ changes to negative by -25 degrees or more, it can be considered that the user 43 changes the movement direction to the right direction. The threshold of the change amount can be set to -25 degrees. The threshold for determining the use intention is stored in the shoulder detection information DB 35. For example, the shoulder detection information DB 35 stores a threshold for each door for which the movement direction and an origin are set. The CPU 31 reads the corresponding threshold from the shoulder detection information DB 35 and uses the threshold to determine the use intention.

When the execution of S3 is started, for example, when it is detected that the angle θ is equal to or less than +80 degrees and the change amount of the angle θ is changed to negative by -25 degrees or more, the CPU 31 determines that the user 43 has a use intention. The method of determining the use intention based on the motion of the shoulder described above is an example. For example, the CPU 31 may determine the use intention by executing only one of the method of comparing the shoulder angle θ with the threshold and the method of comparing the change amount of the shoulder angle θ with the threshold. The CPU 31 may determine whether the threshold is exceeded a plurality of times instead of determining whether the threshold is exceeded once. For example, the CPU 31 may determine the angle θ at predetermined time intervals, and may determine that there is a use intention when a determination result that the angle θ is equal to or less than +80 degrees is repeated a plurality of times. The CPU 31 may determine that there is a use intention when a state, in which the change amount of the angle θ changes to negative, continues for the predetermined time. Therefore, the motion of the shoulder may be determined without using the threshold.

The CPU 31 may determine the use intention based on a change range of the angle θ. For example, the CPU 31 may determine that there is a use intention when a state, in which the angle θ changes at 80 degrees or less, continues for the predetermined time. The CPU 31 may determine the use intention using an average value of the angle θ in the predetermined time, or may determine the use intention based on a slope of a straight line obtained by approximating a change in the angle θ for each predetermined time. Therefore, as the method of determining the use intention, various calculation methods and comparison methods capable of detecting the change in the shoulder angle θ when the user 43 has the use intention and when the user 43 does not have the use intention can be adopted. Similarly, various calculation methods and comparison methods can be adopted as the method of determining the use intention based on a change in which the walking speed is decelerated, which will be described later.

The CPU 31 may change a condition (a threshold or the like) used for determination according to physical features such as a height and a shoulder width of the user 43. The CPU 31 may receive registration of the manner of walking of each individual for an owner of the vehicle 2, the family thereof, or the like. Then, the CPU 31 may set the threshold for each individual based on the received feature of the manner of walking. For example, the vehicle door control device 1 may have a mode in which the shoulder angle θ or the change amount of the user 43 walking around the vehicle is detected, and the threshold is set based on the detected information. The CPU 31 may change the threshold according to the position or the type of the door for which the origin is set, or may change the threshold according to a positional relationship between the door for which the origin is set and the user 43. Therefore, the threshold may be appropriately changed according to a relative positional relationship between the user 43 and the vehicle 2, and features of the user 43 and the vehicle 2.

In S4, the CPU 31 acquires position information indicating a position to the vehicle 2 at which the motion of the shoulder is performed, and estimates a target door. For example, the CPU 31 estimates the target door based on the position of the user 43 at the time point when the above-described angle θ is equal to or less than 80 degrees and the change amount of the angle θ changes to negative by -25 degrees or more. When the angle θ and the change amount exceed the thresholds at a position P3 indicated by a solid line in Fig. 4, the user 43 is present at a position facing the front door 12R in the left-right direction. Therefore, there is a high possibility that the user 43 has an intention to open the front door 12R.

On the other hand, for example, when the angle θ and the change amount exceed the thresholds at a position P4 indicated by a broken line in Fig. 4, the user 43 is present at a position facing the rear door 13R in the left-right direction. Therefore, there is a high possibility that the user 43 has an intention to open the rear door 13R. Therefore, the CPU 31 estimates the target door based on the position of the user 43, at the time point when the angle θ and the change amount exceed the thresholds, and the position of each door.

The method of estimating the target door is not limited to the above-described method. For example, the user 43 may change the movement direction at the position P3 and then move obliquely toward the rear door 13R. Therefore, the CPU 31 may estimate the target door based on the subsequent movement direction in addition to the position at the time point when the angle θ and the change amount exceed the thresholds. Similarly, in a method of estimating the target door based on a change in which the walking speed is decelerated, which will be described later, the target door may be estimated based on the subsequent movement direction or the like in addition to the deceleration position or the like. The CPU 31 may estimate the target door based on factors other than the position of the user 43 at the time when the angle θ is equal to or less than 80 degrees and the change amount of the angle θ is changed to negative by -25 degrees or more. For example, the use intention may be determined based on the motion of the shoulder in S3, and the target door may be estimated based on factors other than the motion of the shoulder in S4. That is, reference information for determining the use intention and material information for estimating the target door may be different information. For example, the CPU 31 may detect an orientation of the body of the user 43 based on the straight line L1 and the movement direction, and estimate the target door based on the detected orientation of the body and the movement direction.

The CPU 31 may execute the processing of S3 and S4 in parallel. For example, the CPU 31 may change the origin of the XY coordinates when the target door is estimated based on the orientation of the body and the movement direction in S4 and the estimated target door is changed. Specifically, the CPU 31 may set the origin to the origin O2 when the target door estimated in S4 is the rear door 13R, and may set the origin to the origin O3 when the target door is the back door 14. Then, the CPU 31 may change the threshold for determining the use intention, according to the change of the origin.

When it is determined in S3 that there is a use intention, the CPU 31 estimates the target door in S4, releases the door locking of the estimated target door, and executes the control for opening the door in S9. For example, when the target door is the front door 12R, the CPU 31 controls the door lock device 15A to release the door locking of the front door 12R, and then controls the door opening and closing device 16A to execute control for opening the front door 12R. Accordingly, when it is possible to determine whether there is a use intention based on the motion of the shoulder of the user 43 around the vehicle, and it is determined that there is a use intention, it is possible to automatically open the target door predicted to be opened by the user 43.

### Regarding Control for Other Doors

In the above description, the front door 12R has been mainly described, but the other doors can be similarly controlled. In this case, the threshold or the like may be changed according to the walking direction of the user, the position of the user, the door for which the origin is set, or the like. Fig. 6 is a graph showing a relationship between the X coordinate and the shoulder angle θ when the user 43 walks from right rear to the front of the vehicle 2. In the case shown in Fig. 6, unlike the cases shown in Figs. 4 and 5, the X coordinate of the position of the user 43 changes from positive to negative. As shown in Fig. 6, for example, a value of the shoulder angle θ, a value of the change amount of the angle θ, a mode of change of each value, transition of each value, or the like are different from those in the case shown in Fig. 5. Specifically, as indicated by the upper hatching in the graphs of Figs. 5 and 6, the change range of the angle θ when there is no use intention is +100 degrees to +80 degrees in the case of Fig. 5, whereas +100 degrees to +75 degrees in the case of Fig. 6. Therefore, in the case of Fig. 6, +75 degrees may be set as the threshold for determining the use intention based on the angle θ. Then, when the angle θ is equal to or less than +75 degrees in S3, the CPU 31 may determine that there is a use intention.

### Regarding Case where Obstacle is Present

The use intention is determined based on the motion of the shoulder of the user 43 by the processing of S3 described above. However, a path along which the user 43 moves and a road width through which the user 43 passes are changed or restricted by an obstacle around the vehicle. When the movement path or the like is changed, the motion of the shoulder, the orientation of the body, and the shoulder angle θ of the user 43 are different from those in the case where there is no obstacle. Fig. 7 shows the movement path and the motion of the shoulder of the user 43 when an obstacle 51 is present around the vehicle. The obstacle 51 is, for example, a wall, a material placed in a parking lot, another vehicle, a bicycle, a guardrail, or another structure. Alternatively, the obstacle 51 may be a moving object such as a pedestrian.

As shown in Fig. 7, for example, when the road width of the path approaching the vehicle 2 from the front is narrow enough for the user 43 to face rearward and not to walk, the user 43 moves sideways while facing a vehicle 2 side. Therefore, the motion of the shoulder of the user 43 is different from that in the case where the user 43 walks facing rearward as shown in Fig. 4. Specifically, the change range and the change amount of the shoulder angle θ are smaller than those in the case of Fig. 4. For example, the change range of the angle θ when the user 43 moves in a lateral direction along the wall is +30 degrees to -30 degrees. For example, when the user 43 starts an operation of approaching the vehicle 2 after passing through the passage sandwiched by the obstacle 51, the change range and the change amount of the angle θ increase. When the obstacle 51 is present on the path from the current position of the user 43 to the vehicle 2 along the shortest path, the user 43 needs to go to the vehicle 2 while bypassing the obstacle 51. As a result, the motion of the shoulder of the user 43 is different from that in the case where there is no obstacle 51 as shown in Fig. 4. A relationship between the obstacle 51 and the motion of the shoulder of the user 43 is verified in advance, and a threshold or the like for determining the angle θ is set in the shoulder detection information DB 35.

When the obstacle 51 is detected around the vehicle in S2, the CPU 31 changes the determination condition of S3. That is, when the detected obstacle 51 becomes an obstacle for the movement of the user 43, the CPU 31 changes the condition for determining the use intention based on the movement path (change of the path itself, change of the road width of the path, or the like) of the user 43 restricted by the obstacle 51. Specifically, for example, the CPU 31 detects information on the movement path of the user 43 (information such as a predicted movement (detour) path, the road width of the movement path, and an orientation of the user 43 on the movement path) based on a position and a size of the obstacle 51 detected in S2. The CPU 31 searches for corresponding threshold information from the shoulder detection information DB 35 on condition of the detected information on the movement path, and determines a threshold. Accordingly, when the change range of the angle θ or the change amount of the angle θ is changed by the obstacle 51, it is possible to determine the use intention using the threshold according to the changed change range or the like of the angle θ. Therefore, for example, a threshold corresponding to a combination of the movement path, the road width, the orientation, or the like may be set in the shoulder detection information DB 35.

The method of changing the condition for determining the use intention according to the obstacle 51 is an example. For example, the CPU 31 may correct the threshold based on the shoulder angle θ of the user 43 near the obstacle 51. The CPU 31 may correct the threshold by multiplying, by a coefficient, a difference between the change amount of the angle θ when there is no obstacle 51 and the change amount of the angle θ near the obstacle 51. The CPU 31 may be configured not to determine that there is a use intention in a case where the position of the user 43, when it is determined to have a use intention based on the motion of the shoulder, is the position of the obstacle 51. As described above, the shoulder angle θ varies depending on the presence or absence of the obstacle 51. Therefore, for example, even when the shoulder angle θ is equal to or less than the threshold, the CPU 31 may not determine that the user 43 has a use intention when the user 43 is present near the obstacle 51. When the obstacle 51 is detected around the vehicle in S2, the CPU 31 may change the method or the condition for estimating the target door in S4. When there is the obstacle 51 near the user 43 and when there is no obstacle 51, the CPU 31 may change the method or the condition for estimating the target door based on the position of the user 43.

### Deceleration Position

Next, processing of S5 and S6 will be described. In the processing of S5, it is determined that there is a use intention based on the fact that the walking speed of the user 43 approaching the vehicle 2 is decelerated. In the processing of S6, the target door is estimated based on the position of the user 43 when the walking speed is decelerated. The CPU 31 detects the walking speed of the user 43 approaching the vehicle 2 based on the imaging data captured by each camera in S5 (S5). For example, the CPU 31 detects the walking speed of the user 43 in real time, and when the walking speed is equal to or less than a predetermined threshold, the CPU 31 determines that the walking speed is decelerated, that is, determines that there is a use intention, and executes S6. Alternatively, the CPU 31 may determine that the walking speed is decelerated (has a use intention) in a case where a decrease amount, when the walking speed is decelerated, is equal to or larger than a predetermined threshold. In a case where the walking speed is equal to or less than the predetermined threshold and the decrease amount, when the walking speed is decelerated, is equal to or larger than the predetermined threshold, the CPU 31 may determine that there is a use intention. As described above, similarly to the case of determining the use intention based on the motion of the shoulder, the CPU 31 may determine the use intention based on whether the walking speed exceeds the threshold a plurality of times instead of determining the use intention based on whether the walking speed exceeds the predetermined threshold once. Alternatively, the CPU 31 may determine that there is a use intention when a state, in which the decrease amount of the walking speed changes to the predetermined threshold or more, continues for a predetermined time.

Therefore, the CPU 31 may determine whether there is a use intention based on the change in which the walking speed of the user 43 is decelerated. In at least one of the case where the walking speed is equal to or less than the predetermined threshold and the case where the decrease amount of the walking speed is equal to or more than the predetermined threshold, the CPU 31 may determine that there is a use intention. Accordingly, it is possible to determine the use intention by comparing the walking speed or the decrease amount with the threshold.

In a case where the position at which the user 43 has decelerated is away from the vehicle 2 by a predetermined distance, the CPU 31 may not determine that the walking speed is decelerated even when the walking speed is equal to or less than the predetermined threshold. That is, when the distance between the vehicle 2 and the user 43 is long and it is unclear whether the user 43 has a use intention, it may not be determined that there is a use intention. When the position at which the user 43 has decelerated is the position of the obstacle 51 detected in S2, the CPU 31 may not determine that the walking speed is decelerated even when the walking speed is equal to or less than the predetermined threshold. When the position at which the user 43 has decelerated is the position of the obstacle 51 detected in S2, the CPU 31 may not determine that the walking speed is decelerated even when the decrease amount of the walking speed is equal to or larger than the predetermined threshold. That is, when the walking speed is decelerated due to the influence of the obstacle 51, since there is a possibility that the user 43 does not have a use intention, it may not be determined that the user 43 has the use intention.

Therefore, in a case where the position of the user 43, when the change in which the walking speed is decelerated, is the position of the obstacle 51 detected by the obstacle detection unit 31E, the CPU 31 may be configured not to determine that there is a use intention. Accordingly, it is possible to prevent the use intention of the user from being erroneously determined due to the obstacle 51.

In S6, the CPU 31 acquires position information indicating a position to the vehicle 2 at which the walking speed is decelerated, and estimates a target door. For example, the CPU 31 estimates the target door based on the position of the user 43 at the time when the walking speed is equal to or less than the predetermined threshold. The CPU 31 may estimate the target door based on the position of the user 43 at the time when the decrease amount, when the walking speed is decelerated, is equal to or larger than the predetermined threshold. Alternatively, the CPU 31 may estimate the target door based on the position of the user 43 at the time when the walking speed is equal to or less than the predetermined threshold and the decrease amount, when the walking speed is decelerated, is equal to or larger than the predetermined threshold.

Therefore, the CPU 31 may determine that deceleration of the walking speed has occurred in at least one of the case where the walking speed is equal to or less than the predetermined threshold and the case where the decrease amount of the walking speed is equal to or larger than the predetermined threshold, and estimate the target door based on the position of the user 43 when the deceleration of the walking speed is detected. The user 43 may move to the vicinity of the door that the user 43 wants to open, and then decelerate. Therefore, for example, the CPU 31 estimates, as the target door, a door closest to the position at which the walking speed is decelerated to the predetermined threshold or less. Alternatively, the CPU 31 estimates, as the target door, a door closest to the position at which the decrease amount is equal to or larger than the predetermined threshold. Accordingly, the target door can be estimated by comparing the walking speed or the decrease amount with the threshold.

The estimation method for the target door in S6 is not limited to the above-described method. For example, the CPU 31 may detect, in addition to the position at which the walking speed is decelerated, the position of the obstacle 51, the orientation of the user 43, or the like based on the imaging data, and predict the movement path of the user 43 after the deceleration based on a detection result. The CPU 31 may estimate, as the target door, a door present at a movement destination of the predicted movement path.

Therefore, the CPU 31 may detect the orientation of the body of the user 43 present around the vehicle 2 by the orientation detection unit 311. The CPU 31 may estimate the target door based on the change in which the walking speed is decelerated and the orientation of the body of the user 43. Accordingly, the estimation accuracy of the target door can be improved by performing the estimation based on both the change in the deceleration of the walking speed and the orientation of the body of the user 43. The orientation of the body in the present specification is not limited to an orientation of the shoulder of the user 43, and may be an orientation of the head, an orientation of the chest, an orientation of the feet, or the like. Therefore, as the orientation of the body in this specification, an orientation of each part of the human body that can determine the orientation of the body of the user 43 can be adopted. The orientation of the body can be detected using each camera and the sensor 8.

For example, the CPU 31 may set a predicted movement path in a front direction of the user 43 based on the orientation of the body of the user 43 at the position at which the walking speed is decelerated to the predetermined threshold or less, and estimate a door present at the movement destination of the predicted movement path as the target door. For example, the CPU 31 may estimate the target door based on the deceleration position and the orientation of the shoulder. When the shoulder angle θ or the change amount of the user 43 exceeds the threshold at the position of the user 43 when the walking speed is decelerated, the CPU 31 may estimate, as the target door, a door at a position facing the position of the user 43 at that time in the left-right direction.

The CPU 31 may estimate the target door based on a predicted stop position or a stop position described later and the orientation of the body. For example, when the shoulder angle θ or the like of the user 43 exceeds the threshold at a position at which the user 43 stops, the CPU 31 may estimate, as the target door, a door at the position facing the position of the user 43 at that time in the left-right direction.

When the CPU 31 detects deceleration in S5 and determines that there is a use intention, the CPU 31 releases the door locking of the target door estimated in S6 and executes the control for opening the door (S9). Accordingly, similarly to the motion of the shoulder of the user 43, it is possible to determine whether there is a use intention based on the deceleration of the walking speed, and when there is a use intention, it is possible to automatically open the target door predicted to be opened by the user 43.

Therefore, the CPU 31 executes the control for opening a door, which is the target door estimated in S6 when it is determined in S5 that there is a use intention. Accordingly, the target door can be quickly opened after the use intention is detected. The target door can be opened before the user 43 arrives at the target door. The CPU 31 may be configured to estimate the target door in S6 and execute the control for opening the door, which is the estimated target door, after a certain standby time elapses after it is determined in S5 that there is a use intention.

### Predicted Stop Position and Stop Position

Next, processing of S7 and S8 will be described. In the processing of S7, it is determined that there is a use intention based on detection of a state where the user 43 approaching the vehicle 2 is likely to stop or a state where the user 43 has stopped. In the processing of S8, the target door is estimated based on a position at which the user 43 is likely to stop or a position at which the user 43 has stopped. The CPU 31 detects the walking speed of the user 43 approaching the vehicle 2 based on the imaging data captured by each camera in S7. For example, the CPU 31 detects the walking speed of the user 43 in real time, and when the detected walking speed is equal to or less than a predetermined threshold, the CPU 31 determines that the user 43 is in a state where the user 43 is likely to stop, that is, determines that the user 43 has a use intention, and executes S8. The threshold for determining whether the person is likely to stop is a value smaller than the threshold for determining the deceleration in S5, and is a speed at which the person is likely to stop walking. Alternatively, the CPU 31 may determine that the user 43 is likely to stop when a state where the walking speed is equal to or less than the predetermined threshold continues for a predetermined time or more.

When a state where the user 43 stops and the walking speed is zero continues for the predetermined time, or when a state where the position of the user 43 stays within a predetermined range continues for the predetermined time, the CPU 31 determines that the user 43 is in a stopped state, and executes S8. The CPU 31 may determine that the user 43 is in the stopped state and execute S8 when a state where the user 43 stops at a position at which the user 43 is predicted to stop and the walking speed is zero continues for the predetermined time.

Therefore, the CPU 31 may detect, based on a change in which the walking speed is decelerated, at least one position of the position at which the user 43 is predicted to stop walking and the position at which the user 43 stops moving (S7). When the state where the walking speed is zero at at least one of the positions continues for the predetermined time, the CPU 31 may determine that there is a use intention. Accordingly, the use intention can be determined on the condition that the user stops at the predicted stop position or the stop position for the predetermined time.

Similarly to the deceleration position in S5, when the position at which the user is likely to stop or the position at which the user has stopped is away from the vehicle 2 by a predetermined distance, the CPU 31 may determine that there is no use intention even when the state at which the user is likely to stop or the state at which the user has stopped is detected. When the position at which the user is likely to stop or the position at which the user has stopped is the position of the obstacle 51 detected in S2, the CPU 31 may determine that the user has no use intention even when the state at which the user is likely to stop or the state at which the user has stopped is detected. That is, when the user 43 has stopped due to the influence of the obstacle 51, since there is a possibility that the user 43 does not have the use intention, it may not be determined that the user 43 has the use intention. Accordingly, similarly to the deceleration position described above, it is possible to prevent the use intention of the user 43 from being erroneously determined due to the obstacle 51.

In S8, the CPU 31 acquires position information indicating a position to the vehicle 2 at which the user is likely to stop or a position at which the user has stopped, and estimates the target door. For example, the CPU 31 estimates the target door based on the position of the user 43 at the time when the walking speed is equal to or less than the predetermined threshold (threshold for determining the state where the user 43 is likely to stop). For example, the CPU 31 estimates the target door based on the position of the user 43 at the time when the state where the walking speed is zero continues for the predetermined time. For example, when the user 43 stops at the position at which the user 43 is predicted to stop and the state where the walking speed is zero continues for the predetermined time, the CPU 31 estimates the target door based on the position at which the user 43 has stopped. The user 43 may move to the vicinity of the door that the user 43 wants to open, and then stop. Therefore, for example, the CPU 31 estimates, as the target door, a door closest to a position at which the walking speed is decelerated to the predetermined threshold or less or a position at which the state where the walking speed is zero continues for the predetermined time.

Therefore, when the state where the walking speed is zero, at at least one position of the position at which the user 43 is predicted to stop walking and the position at which the user 43 stops walking, continues for the predetermined time, the CPU 31 estimates the target door based on the at least one position (S8). Accordingly, the target door can be estimated on the condition that the user stops at the predicted stop position or the stop position for the predetermined time.

The estimation method for the target door in S8 is not limited to the above-described method. For example, the CPU 31 may detect the position at which the walking speed is decelerated, the decrease amount of the walking speed, the position of the obstacle 51, the orientation of the body of the user 43, or the like based on the imaging data, and predict the stop position of the user 43 based on the detection result. The CPU 31 may estimate a door closest to the predicted stop position as the target door. Therefore, the CPU 31 may estimate the target door based on the predicted stop position, the stop position, the orientation of the body of the user 43, or the like.

When the estimation of the target door based on the deceleration position in S6 and the estimation of the target door based on the stop position or the like in S8 are executed, the CPU 31 may estimate the target door using information such as the line of sight and the face orientation of the user 43 in addition to the deceleration position and the stop position. Accordingly, the target door can be specified more accurately.

When the CPU 31 detects the state where the user is likely to stop, or the like in S7 and determines that there is a use intention, the CPU 31 releases the door locking of the target door estimated in S8 and executes the control for opening the door (S9). Accordingly, similarly to the motion of the shoulder of the user 43, it is possible to determine whether there is a use intention based on the detection of the state where the user 43 is likely to stop or the state where the user 43 has stopped, and to automatically open the target door predicted to be opened by the user 43.

For example, the CPU 31 executes the three sets of processing of the processing of the combination of S3 and S4, the processing of the combination of S5 and S6, and the processing of the combination of S7 and S8 in parallel, and executes the control for opening the target door in S9 based on the processing in which it is determined that there is a use intention first. Accordingly, when it is difficult to detect the motion of the shoulder and the angle θ of the user 43, the target door can be estimated and opened based on the deceleration position, the position at which the user 43 is likely to stop, or the like.

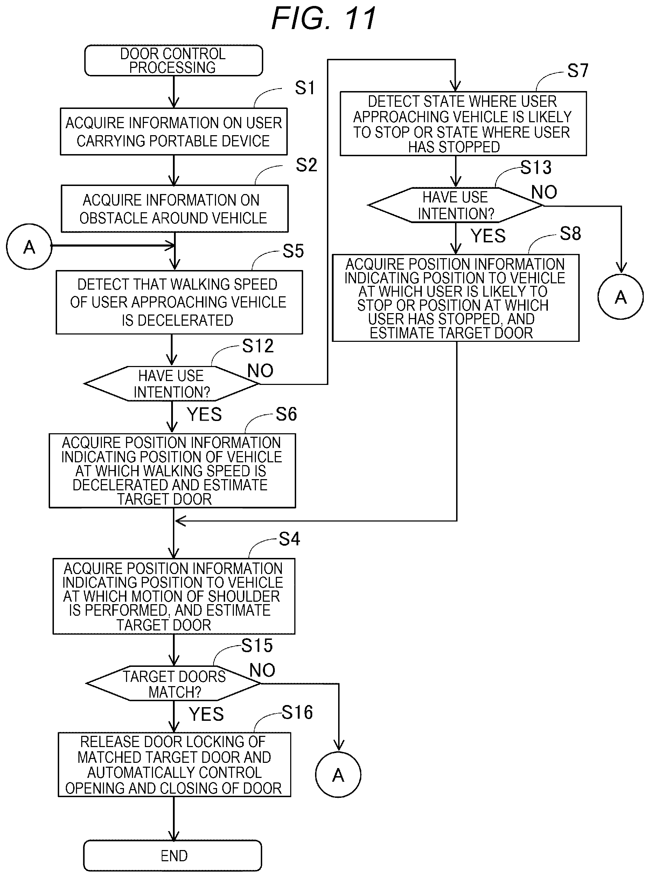

The CPU 31 may control the door by comprehensive determination based on processing results of at least two sets of processing among the three sets of processing. For example, when the shoulder angle θ of the user 43 is equal to or less than the threshold (S3) and the walking speed is equal to or less than the predetermined threshold (S5), the CPU 31 may execute the control for opening the target door. In this case, the CPU 31 may execute the control for opening the target door only when the target door estimated in S4 matches the target door estimated in S6 (see Fig. 11). Alternatively, when the shoulder angle θ of the user 43 is equal to or less than the threshold (S3) and the state where the walking speed is zero continues for the predetermined time (S7), the CPU 31 may execute the control for opening the target door. In this case, the CPU 31 may execute the control for opening the target door only when the target door estimated in S4 matches the target door estimated in S8.

Therefore, the CPU 31 may open the target door when it is determined that the user has a use intention by at least one processing of the three sets of processing, or may open the target door by comprehensively determining the processing results of the three sets of processing. When the target door estimated based on the change in which the walking speed is decelerated matches the target door estimated based on the orientation of the body of the user 43 (the orientation of the shoulder or the like), the CPU 31 may execute the control for opening the door, which is the matched target door. Accordingly, it is possible to prevent the control for opening the door from being executed when the door that is not intended by the user 43 is set as the target door.

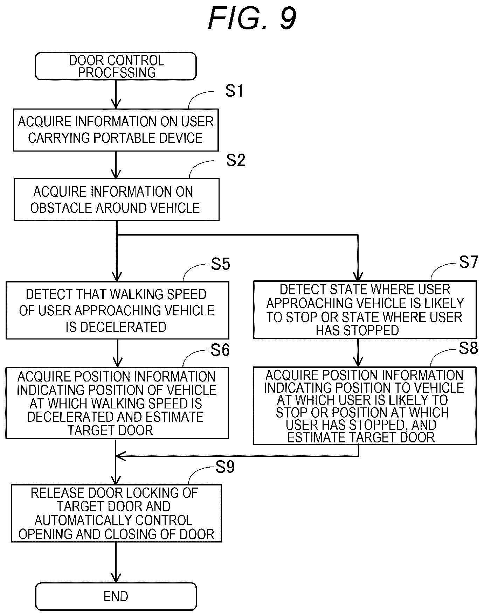

The CPU 31 may be configured to determine whether there is a use intention by executing only one processing or only two processing among the three processing S3, S5, and S7 shown in Fig. 3. The CPU 31 may be configured to estimate the target door by executing only one processing or only two processing among the three processing of S4, S6, and S8. Fig. 9 shows a flowchart of a door control processing program of another example. As shown in Fig. 9, the CPU 31 may be configured to execute the combination of S5 and S6 and the combination of S7 and S8 in parallel. Therefore, in the door control processing program shown in Fig. 3 described above, the CPU 31 executes the processing of S3 and S4, and determines the use intention and the target door based on the motion of the shoulder of the user 43. On the other hand, in the door control processing program shown in Fig. 9, the CPU 31 determines the use intention and the target door based on the change, in which the movement speed of the user 43 is decelerated, without determining the motion of the shoulder.

In the door control processing program shown in Fig. 9, the CPU 31 determines the use intention, based on the deceleration position in S5 and the predicted stop position or the stop position in S7, as the change in which the movement speed of the user 43 is decelerated. Similarly, the CPU 31 estimates the target door based on the deceleration position in S6 and the predicted stop position or the stop position in S8.

The CPU 31 may be configured to execute, for example, the combination of S3 and S4 and the combination of S5 and S6 shown in Fig. 3 in parallel. The CPU 31 may be configured to execute the combination of S3 and S4 and the combination of S7 and S8 in parallel. The CPU 31 may be configured to execute only the combination of S3 and S4, only the combination of S5 and S6, or only the combination of S7 and S8.

Each combination may be replaced. For example, the CPU 31 may be configured to determine the use intention based on the motion of the shoulder (S3) and estimate the target door based on the deceleration position (S6). Similarly, the CPU 31 may be configured to determine the use intention based on the deceleration position (S5) and estimate the target door based on the predicted stop position or the stop position (S8).

The number of processing for determining the use intention and the number of processing for estimating the target door may not be the same. For example, the CPU 31 may be configured to determine the use intention based on the motion of the shoulder (S3) and the deceleration position (S5), and estimate the target door based on the predicted stop position or the stop position (S8). The CPU 31 may be configured to determine the use intention based on the motion of the shoulder (S3) and estimate the target door based on the motion of the shoulder (S4) and the deceleration position (S6).

In a configuration in which two or more combinations of processing are executed, in a case where the use intention is present in all combinations of processing, the CPU 31 may execute the control for opening the door, which is the target door estimated in the combination in which the use intention is determined last. For example, the CPU 31 is configured to execute the combination of S5 and S6 and the combination of S7 and S8 shown in Fig. 9 in parallel. With this configuration, when the CPU 31 determines that there is a use intention in S7 after determining that there is a use intention first in S5, the CPU 31 may execute the control for opening the door, which is the target door estimated in S8 that is the same set as in S7. That is, even when the target doors estimated in the processing of S6 and S8 do not match, the target door estimated in the processing executed later may be set as a control target. Accordingly, the target door can be estimated based on the latest state of the user 43, and the estimation accuracy of the target door can be improved.

In a configuration in which two or more types of determination processing of the use intention (S3, S5, and S7) and estimation processing of the target door (S4, S6, and S8) are executed in combination, a processing result to be prioritized may be set. For example, in a combination of S3 and S7, when it is determined that there is a use intention by both determination processing, the target door may be estimated in S8 based on the position detected in S7. That is, for the estimation of the target door, S7 and S8 may be prioritized over S3 and S4.

### Effects of First Embodiment

As described above in detail, the first embodiment has the following effects. (1) According to the vehicle door control device 1 of the first embodiment and a computer program executed by the vehicle door control device 1, the CPU 31 of the ECU 10 detects the motion of the shoulder of the user 43 present around the vehicle 2 (S1, S3), and determines whether the user 43 has a use intention on the vehicle 2 based on the detection result (S3). The CPU 31 estimates the target door predicted to be opened by the user 43 among the doors of the vehicle 2 (S4). When the CPU 31 determines that there is a use intention, the CPU 31 executes control for releasing locking and opening the target door estimated in S4 (S9).

Accordingly, the CPU 31 can determine the use intention based on the motion of the shoulder of the user 43, and can open the estimated target door, that is, the door predicted to be opened by the user 43 when there is a use intention. When the user 43 wants to use the vehicle 2, the door that the user 43 wants to open can be automatically opened only by the user 43 approaching the vehicle 2. Even when it is difficult to recognize the face due to a mask or the like, it is possible to determine a use intention by the motion of the shoulder of the user 43 and open the door.

(2) In S2, the CPU 31 detects the obstacle 51 present around the vehicle. When the detected obstacle 51 becomes an obstacle for the movement of the user 43, the CPU 31 changes a condition for determining whether the user 43 has a use intention based on the movement path of the user 43 restricted by the obstacle 51.

Accordingly, as shown in Figs. 4 and 7, when the orientation of the body of the user 43, the movement direction of the shoulder, the magnitude of the angle θ, the movement path, the road width, or the like are changed by the obstacle 51, the threshold or the like corresponding to the change can be set as the determination condition. If the use intention is uniformly determined under the same determination condition regardless of the presence or absence of the obstacle 51, the threshold or the like is not appropriate, and the determination accuracy may decrease. Therefore, when the movement path is restricted by the obstacle 51, the determination condition is changed according to the obstacle 51 or the situation of the movement path, so that the determination accuracy of the use intention can be improved.

(3) The CPU 31 detects the shoulder angle θ of the user 43 with respect to the X-axis along the side surface of the vehicle 2. The CPU 31 compares each of the detected shoulder angle θ and the change amount of the shoulder angle θ with the threshold, and determines whether there is a use intention.

Accordingly, it is possible to determine whether there is a use intention based on the shoulder angle θ and the change amount of the angle θ. After the user 43 approaches the vehicle 2, an operation of changing the direction toward the vehicle 2 can be detected based on the angle θ, and the door desired to be opened by the user 43 can be opened in advance.

(4) The CPU 31 estimates the target door based on the position (S6) at which the movement speed of the user 43 approaching the vehicle 2 is decelerated, the position (S8) at which the user 43 is predicted to stop moving, and the position (S8) at which the user 43 stops moving. When it is difficult to detect the motion of the shoulder of the user 43, the CPU 31 executes the control for opening the target door estimated in S6 or S8 (S9).

Accordingly, for example, when it is difficult to detect the shoulder angle θ or the like based on the imaging data because it is raining and the user 43 is holding an umbrella, or when it is difficult to detect the shoulder angle θ or the like based on the imaging data because the periphery of the vehicle is dark, the target door can be estimated based on the deceleration position, the stop position, or the like of the user 43, and the estimated target door can be opened. When it is difficult to detect the operation of the shoulder, it is possible to prevent the target door from not being opened by estimating the target door by another method.

(5) The CPU 31 detects the motion of the shoulder of the user 43 when the position of the portable device 41 detected by the wireless communication device 9 is within the predetermined range from the vehicle 2. Accordingly, it is possible to reduce unnecessary consumption of the battery without activating each camera or the like until the user 43 approaches the predetermined range.

(6) According to the vehicle door control device 1 of the first embodiment and the computer program executed by the vehicle door control device 1, the CPU 31 of the ECU 10 detects the walking speed of the user 43 present around the vehicle 2 and determines the use intention of the user 43 (S5 and S7). The CPU 31 estimates the target door based on the change in which the walking speed is decelerated (S6 and S8). When the CPU 31 determines that there is a use intention, the CPU 31 executes the control for releasing locking and opening the target door estimated in S6 and S8 (S9).

Accordingly, when the user 43 has a use intention, the CPU 31 can open the target door estimated based on the change in which the movement speed of the user 43 is decelerated, that is, the door predicted to be opened by the user 43. When the user 43 wants to use the vehicle 2, the door that the user 43 wants to open can be automatically opened only by the user 43 approaching the vehicle 2 and decelerating. Even when it is difficult to recognize the face due to a mask or the like, it is possible to determine a use intention by deceleration of the user 43 and open the door.

(7) The CPU 31 detects at least one position of the position at which the user 43 is predicted to stop moving and the position at which the user 43 stops moving (S8), and estimates the target door based on the detected position. Accordingly, the target door can be estimated based on the predicted stop position or the stop position. It is possible to detect an operation in which the user 43 stops in order to open a door, and estimate and open the target door.

(8) The CPU 31 detects the position of the user 43 when the deceleration of the walking speed is detected (S6), and estimates the target door based on the detected position. Accordingly, the target door can be estimated based on the deceleration position. It is possible to detect an operation in which the user 43 decelerates in order to open a door, and estimate and open the target door.

### Second Embodiment

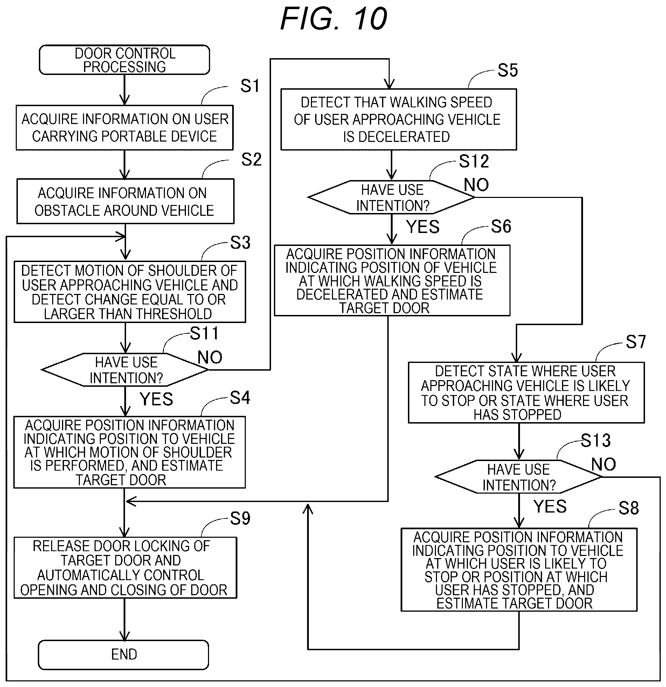

Next, a second embodiment disclosed here will be described. In the first embodiment described above, the CPU 31 executes the processing of S3 and S4, the processing of S5 and S6, and the processing of S7 and S8 shown in Fig. 3 in parallel. On the other hand, the CPU 31 of the second embodiment is different from that of the first embodiment in that the processing of S3 to S8 is sequentially executed as shown in Fig. 10. In the following description of the second embodiment, the same components as those of the first embodiment are denoted by the same reference signs.

As shown in Fig. 10, similarly to the first embodiment, when S1 to S3 are executed, the CPU 31 determines whether it can be determined that there is a use intention based on the shoulder angle θ and the change amount, as a result of executing S3 (S11). When the CPU 31 can determine that there is a use intention (S11: YES), the CPU 31 estimates the target door based on the position at which the shoulder is moved in S4, and opens the target door in S9 (S9).

On the other hand, when the CPU 31 determines that there is no use intention (S11: NO), the CPU 31 executes S5. Therefore, the CPU 31 determines the use intention based on the shoulder angle θ or the like at the time when S3 is executed, and when it cannot be determined that there is a use intention based on the motion of the shoulder, executes S5 and determines the use intention based on the deceleration position. As a result of executing S5, for example, when the CPU 31 detects the deceleration of the walking speed (S12: YES), the CPU 31 opens the target door based on the deceleration position (S6 and S9).

Similarly, when the CPU 31 cannot detect deceleration at the time when S5 is executed and determines that there is no use intention (S12: NO), the CPU 31 executes S7 and determines the use intention based on the state where the user is likely to stop or the like. When the CPU 31 can detect the state where the user is likely to stop or the state where the user has stopped at the time when S7 is executed (S13: YES), the CPU 31 opens the target door estimated based on the position at which the state is detected (S8 and S9). When the CPU 31 cannot detect the state where the user is likely to stop or the state where the user has stopped in S7 (S13: NO), the CPU 31 executes the processing from S3 again and determines the motion of the shoulder. As described above, the CPU 31 may sequentially execute the processing of S3 to S8.

The CPU 31 may be configured to determine whether there is a use intention by executing only one processing or only two processing among the three processing S3, S5, and S7 shown in Fig. 10. The CPU 31 may be configured to estimate the target door by executing only one processing or only two processing among the three processing of S4, S6, and S8 shown in Fig. 10. Fig. 11 shows a flowchart of a door control processing program of another example. As shown in Fig. 11, the CPU 31 may be configured to sequentially execute a combination of S5, S12, and S6 and a combination of S7, S13, and S8. Therefore, even in the configuration in which the processing is performed sequentially (in series) as shown in Fig. 10, the CPU 31 may determine the use intention and the target door based on the change in which the movement speed of the user 43 is decelerated without determining the motion of the shoulder.

For example, the CPU 31 may be configured to sequentially execute a combination of S3, S11, and S4 and a combination of S5, S12, and S6 shown in Fig. 10. The CPU 31 may be configured to sequentially execute a combination of S3, S11, and S4 and a combination of S7, S13, and S8. Each combination may be replaced.

As shown in Fig. 11, similarly to the first embodiment, when S1 and S2 are executed, the CPU 31 executes S5 and determines the use intention based on the deceleration position. As a result of executing S5, for example, when the CPU 31 detects the deceleration of the walking speed (S12: YES), the CPU 31 estimates the target door based on the deceleration position (S6).

When the CPU 31 cannot detect the deceleration at the time when S5 is executed and determines that there is no use intention (S12: NO), the CPU 31 executes S7 and determines the use intention based on the state where the user is likely to stop or the like. When the CPU 31 can detect the state where the user is likely to stop or the state where the user has stopped at the time when S7 is executed (S13: YES), the CPU 31 estimates the target door based on the position at which the state is detected (S8).

The CPU 31 may determine whether the target door estimated in S6 or S8 matches the target door estimated by another method. For example, after executing S6 or S8, the CPU 31 may execute S4 and estimate the target door based on the position at which the shoulder angle θ and the change amount each exceed the threshold. When the target door estimated in S6 or S8 matches the target door estimated in S4 (S15: YES), the CPU 31 may execute the control for opening the matched target door (S16). Accordingly, the target door can be opened only when the target doors estimated by the two estimation methods match, and the door that the user 43 wants to open can be opened more accurately. When the target doors estimated by the two estimation methods do not match (S15: NO), the CPU 31 executes the processing from S5 again and determines the deceleration position.

In the processing of Fig. 11, the CPU 31 may be configured not to execute S4 and S15 and not to determine whether the target doors estimated by the two estimation methods match. For example, the CPU 31 may be configured to execute S9 of Fig. 10 after executing S6 or S8.

It is to be understood that this disclosure is not limited to the above-described embodiments, and various improvements and modifications can be made without departing from the scope of this disclosure.
- For example, in each of the above embodiments, the CPU 31 determines that there is a use intention when the shoulder angle θ or the change amount of the angle θ changes by the threshold or more, but the method of determining the angle θ or the change amount is not limited to such a determination method. For example, when the user 43 walks on a straight line toward the vehicle 2, there is a possibility that the user 43 approaches the vehicle 2 in a state where the angle θ or the change amount is equal to or less than a predetermined value. In such a case, for example, when it is detected that the angle θ or the change amount is equal to or less than a predetermined threshold and the user 43 approaches the vehicle 2 on the straight line, the CPU 31 may execute control for estimating a door ahead of the straight line path as the target door and opening the target door.
- The CPU 31 may not determine the use intention in S5 and S7.
- The CPU 31 estimates the target door based on the position (S6) at which the movement speed of the user 43 approaching the vehicle 2 is decelerated, the position (S8) at which the user 43 is predicted to stop moving, and the position (S8) at which the user 43 stops moving, but the CPU 31 may estimate the target door based on at least one processing of the three processing.
- In each of the above embodiments, the processing is executed for the walking user 43 as a target, but this disclosure is not limited thereto. For example, even when the user 43 is in a wheelchair, the use intention may be determined and the target door may be estimated based on the motion of the shoulder of the user 43, the angle θ, the change amount, the movement speed, the position at which the user 43 is likely to stop, or the like, and the target door may be controlled. Therefore, the movement and the movement speed in the present specification are not limited to walking and a walking speed, and may be movement of a wheelchair and a movement speed of the wheelchair.
- The CPU 31 may change the determination condition of at least one processing of S3 to S8 according to the information on the obstacle 51 detected in S2.
- In S3, the CPU 31 compares each of the detected shoulder angle θ and the change amount of the shoulder angle θ with the threshold to determine the use intention, but the CPU 31 may compare one of them with the threshold to determine the use intention.
- The vehicle control ECU 10 may not include the shoulder detection information DB 35 in a case of a configuration in which the determination of the use intention and the estimation of the target door are executed based on the change in which the movement speed is decelerated.
- In each of the above embodiments, the ECU 10 of the vehicle door control device 1 executes the processing of the door control processing program (Figs. 3, 9, 10, and 11), but an execution subject may be changed as appropriate. For example, the processing in Fig. 3 may be executed by a control unit of a navigation device or other in-vehicle devices.
- When it is difficult to open each door, for example, when another vehicle is parked adjacent to the vehicle 2, the CPU 31 may stop the control for opening the target door or may execute adjustment such as reducing an amount of opening the target door.
- The configuration of the vehicle door control device 1 is not limited to the configuration of each of the above embodiments. For example, the vehicle door control device 1 may include only the ECU 10 or may include only the ECU 10 and each camera.

## Claims

1. A vehicle door control device (1) comprising:
a shoulder operation detection unit (31A) configured to detect a motion of a shoulder of a user present around a vehicle;
a use intention determination unit (31B) configured to determine whether the user has an intention to use the vehicle based on a detection result of the shoulder operation detection unit;
a target door estimation unit (31C) configured to estimate a target door that is a door predicted to be opened by the user among doors of the vehicle; and
a control unit (31D) configured to execute control for opening the door, which is the target door estimated by the target door estimation unit, when the use intention determination unit determines that the user has an intention to use the vehicle.

2. The vehicle door control device according to claim 1, further comprising:
an obstacle detection unit (31E) configured to detect an obstacle present around the vehicle, wherein
when the obstacle detected by the obstacle detection unit becomes an obstacle for movement of the user, the use intention determination unit changes a condition for determining whether the user has an intention to use the vehicle based on a movement path of the user restricted by the obstacle.

3. The vehicle door control device according to claim 1 or 2, wherein
the shoulder operation detection unit detects an angle of the shoulder of the user with respect to the vehicle, and
the use intention determination unit compares a threshold with at least one of the angle of the shoulder of the user detected by the shoulder operation detection unit and a change amount in the angle of the shoulder, and determines whether the user has an intention to use the vehicle.

4. The vehicle door control device according to claim 1 or 2, further comprising:
a second target door estimation unit (31F) configured to estimate the target door based on at least one position among a position at which a movement speed of the user approaching the vehicle is decelerated, a position at which the user is predicted to stop moving, and a position at which the user stops moving, wherein
the control unit executes the control for opening the door, which is the target door estimated by the second target door estimation unit, when the shoulder operation detection unit is difficult to detect the motion of the shoulder of the user.

5. The vehicle door control device according to claim 1 or 2, further comprising:
a position detection unit (31G) configured to detect a position of a portable device carried by the user, wherein
the shoulder operation detection unit detects the motion of the shoulder of the user when the position of the portable device detected by the position detection unit is within a predetermined range from the vehicle.
